# EUROPEAN PATENT APPLICATION

(11) **EP 2 947 891 A1**
(43) Date of publication of application: **25.11.2015**
(21) Application number: 15163260.1
(22) Date of filing: 10.04.2015
(51) Int. Cl.: H04N 21/262, H04N 21/433, H04N 21/462, H04N 21/482

(54) **METHOD FOR PROVIDING EPISODE SELECTION OF VIDEO AND APPARATUS THEREOF**

(30) Priority: 20.05.2014 CN 201410213476
(71) Applicant: Xiaomi Inc., Beijing 100085 (CN)
(72) Inventor: Tian, Li, 100085 BEIJING (CN); Dong, Zhen, 100085 BEIJING (CN); Wang, Bainan, 100085 BEIJING (CN); Liu, Chao, 100085 BEIJING (CN)
(74) Representative: Delumeau, François Guy

(57) **Abstract**

Provided are a method and an apparatus of providing episode selection of video which belong to Internet technology field. The method comprises: for an arbitrary video, acquiring (102) a characteristic identification of the video; querying (104) at least two types of m videos with the same characteristic identification, where m≥2, wherein the at least two types includes any two or all of online video, offline video, and live video; and providing (106) a list of episode selection according to the m videos..

## Description

### TECHNICAL FIELD

The present disclosure generally relates to the field of Internet technology, and more particularly to a method for providing episode selection of video and an apparatus thereof.

### BACKGROUND

With the continuous development of Internet technology, a video player, in addition to providing a basic function of video playback, still needs to provide more auxiliary functions, such as episode selection, continuous playback or associated-video recommendation, etc.

According to different video resources, the video played by a video player can be roughly divided into the following three types: online video, offline video and live video. Among them, the online video refers to a video which is viewed by the user through access to the network, the Offline video refers to a video which is viewed by the user without access to the network and may be obtained by downloading and storing an online video, and the live video refers to a video which is played in real time, such as television broadcast live and Internet broadcast live. A video player can provide a list of episodes for user to select while playing an online video with a plurality of episodes, the list of episodes containing a part or all of the episodes of the current played online video and the episodes contained in the list of episodes being also online videos. Similarly, a video player can provide a list of episodes for user to select while playing an offline video with a plurality of episodes, wherein the list of episodes contains a part or all of the episodes of the current played offline video and the episodes contained in the list of episodes are also offline videos. A video player usually provides a broadcast schedule of the current channel for the user to replay the played live video and/or preview a live video to be broadcasted, while playing a live video, but does not provide the other episodes of the currently played live video.

In the process of realization of the present disclosure, it is found out that the aforementioned modes have at least disadvantages as below: the related art can only provide the play and selection of only a single type of multiple-episode video, the switch between different types of videos requires a large amounts of additional operations, and the smoothness when a user views the video is influenced.

### SUMMARY

In order to solve the problems in the related art that the play and selection of only a single type of multiple-episode video are provided, and the switch between different types of videos requires a large amounts of additional operations, and the smoothness when a user views the video is influenced, embodiments of the present disclosure provide a method and apparatus of providing episode selection of video, and the technical solutions thereof are as below.

According to a first aspect, the invention relates to a method of providing episode selection of video is provided, which includes:

for an arbitrary video, acquiring a characteristic identification of the video;

querying at least two types of m videos with the same characteristic identification, where m≥2, wherein the at least two types includes any two or all of online video, offline video, and live video; and

providing a list of episode selection according to the m videos.

In an embodiment, the step of providing a list of episode selection according to the m videos includes:

acquiring episode identifications of the respective videos;

obtaining n videos by removal of duplicate with regard to the m videos according to the episode identifications, where 1≤n≤m; and

providing a list of episode selection corresponding to the n videos.

In an embodiment, the step of obtaining n videos by removal of duplicate with regard to the m videos according to the episode identifications includes:

when the m videos comprise a online videos and b offline videos, obtaining the n videos by removing the online videos with the same episode identification as that of the offline videos, where a, b≥1;

or,

when the m videos comprise c online videos and d live videos, obtaining the n videos by removing the live videos with the same episode identification as that of the online videos, where c, d≥1;

or,

when the m videos comprise e offline videos and f live videos, obtaining the n videos by removing the live videos with the same episode identification as that of the offline videos, where e, f≥1;

or,

when the m videos comprise g online videos, h offline videos and i live videos, obtaining the n videos by removing the online videos with the same episode identification as that of the offline videos and removing the live videos with the same episode identification as that of the offline videos or the online videos, where g, h, i≥1.

In an embodiment, the step of providing a list of episode selection corresponding to the n videos includes:

when the n videos comprise at least one online video, for each online video, acquiring at least one online play address corresponding to the online video, and providing the list of episode selection according to the at least one online play address;

and/or,

when the n videos comprise at least one offline video, for each offline video, acquiring at least one offline play address corresponding to the offline video, and providing the list of episode selection according to the at least one offline play address;

and/or,

when the n videos comprise at least one live video, for each live video, acquiring at least one broadcast channel corresponding to the live video, and providing the list of episode selection according to the at least one broadcast channel.

In an embodiment, the step of providing the list of episode selection according to the at least one online play address includes:

selecting an online play address from the at least one online play address according to a predetermined condition which includes any of the highest definition, the highest resolution, or the lowest bandwidth utilization of the online resources corresponding to the online play address; and providing the list of episode selection containing the online resource corresponding to the online play address;

or,

providing the list of episode selection containing at least one online resource corresponding to the at least one online play address.

In an embodiment, the step of providing the list of episode selection according to the at least offline play address includes:

selecting an offline play address from the at least one offline play address according to a predetermined condition which includes any of the highest definition, or the highest resolution of the offline resources corresponding to the offline play address; and providing the list of episode selection containing the offline resource corresponding to the offline play address;

or,

providing the list of episode selection containing at least offline resource corresponding to the at least offline play address.

In an embodiment, the step of providing the list of episode selection according to the at least live channel comprising:

acquiring broadcast times of the respective broadcast channels;

selecting a broadcast channel being on live and/or to be on live earliest according to the broadcast times; and

provide the list of episode selection containing the broadcast channel being on live and/or to be on live earliest.

In an embodiment, the method further includes:

when the list of episode selection contains a broadcast channel to be on live earliest, recording a broadcast time of the broadcast channel to be on live earliest; and

providing a subscription and/or reminder service according to the broadcast time.

In an embodiment, the method further comprises:

acquiring a selection signal acting on the list of episode selection;

acquiring a type of a video corresponding to the selection signal; and

displaying a corresponding play interface according to the type and play the video.

According to a second aspect, the invention relates to an apparatus of providing episode selection of video is provided which includes :

a feature acquisition module configured to for an arbitrary video, acquire a characteristic identification of the video;

a video query module configured to query at least two types of m videos with the same characteristic identification, where m≥2, wherein the at least two types includes any two or all of online video, offline video, and live video; and

an episode providing module configured to provide a list of episode selection according to the m videos.

In an embodiment, the episode providing module includes an episode acquisition module, a video removing sub-module, and an episode-selection providing sub-module;

the episode acquisition module is configured to acquire episode identifications of respective videos;

the video removing sub-module is configured to obtain n videos by removal of duplicate with regard to the m videos according to the episode identification, where 1≤n≤m; and

the episode-selection providing sub-module is configured to provide a list of episode selection corresponding to the n videos.

In an embodiment, the video removing sub-module comprises a first removing unit, or a second removing unit, or a third removing unit, or a fourth removing unit;

the first removing unit is configured to, when the m videos comprise a online videos and b offline videos, obtain the n videos by removing the online videos with the same episode identification as that of the offline videos, where a, b≥1;

the second removing unit is configured to, when the m videos comprise c online videos and d live videos, obtain the n videos by removing the live videos with the same episode identification as that of the online videos, where c, d≥1;

the third removing unit is configured to, when the m videos comprise e offline videos and f live videos, obtain the n videos by removing the live videos with the same episode identification as that of the offline videos, where e, f≥1; and

the fourth removing unit is configured to, when the m videos comprise g online videos, h offline videos and i live videos, obtain the n videos by removing the online videos with the same episode identification as that of the offline videos and removing the live videos with the same episode identification as that of the offline videos or the online videos, where g, h, i≥1.

In an embodiment, the episode-selection providing sub-module includes an online providing unit, and/or an offline providing unit, and/or a live providing unit;

the online providing unit is configured to, when the n videos comprise at least one online video, for each online video, acquire at least one online play address corresponding to the online video, and provide the list of episode selection according to the at least online play address;

the offline providing unit is configured to, when the n videos comprise at least one offline video, for each offline video, acquire at least one offline play address corresponding to the offline video, and provide the list of episode selection according to the at least one offline play address; and

the live providing unit is configured to, when the n videos comprise at least one live video, for each live video, acquire at least one broadcast channel corresponding to the live video, and provide the list of episode selection according to the at least one broadcast channel.

In an embodiment, the online providing unit includes a selectively providing sub-unit, or directly providing sub-unit;

the selectively providing sub-unit is configured to select an online play address from the at least one online play address according to a predetermined condition which includes any of the highest definition, highest resolution, or the lowest bandwidth utilization of the online resources corresponding to the online play address, and provide the list of episode selection containing the online resource corresponding to the online play address; and

the directly providing sub-unit is configured to provide a list of episode selection containing at least one online resource corresponding to the at least one online play address.

In an embodiment, the offline providing unit includes a selectively providing sub-unit or a wholly providing sub-unit;

the selectively providing sub-unit is configured to select an offline play address from the at least one offline play address according to a predetermined condition which includes any of the highest definition, or the highest resolution of the offline resources corresponding to the offline play address, and provide the list of episode selection containing the offline resource corresponding to the offline play address;

the wholly providing sub-unit is configured to provide the list of episode selection containing at least offline resource corresponding to the at least offline play address.

In an embodiment, the live providing unit comprises a time acquisition sub-unit, a live selection sub-unit, and a live providing sub-unit;

the time acquisition sub-unit is configured to acquire broadcast times of the respective broadcast channels;

the live selection sub-unit is configured to select a broadcast channel being on live and/or to be on live earliest according to the broadcast times; and

the live providing sub-unit is configured to provide the list of episode selection containing the broadcast channel being on live and/or to be on live earliest.

In an embodiment, the live providing unit further includes a time record sub-unit and a server providing sub-unit;

the time record sub-unit is configured to record a broadcast time of the broadcast channel to be on live earliest when the list of episode selection contains the broadcast channel to be on live earliest; and

the server providing sub-unit is configured to provide a subscription and/or reminder service according to the broadcast time.

In an embodiment, the apparatus further includes:

a signal acquisition module configured to acquire a selection signal acting on the list of episode selection;

a video acquisition module configured to acquire a type of a video corresponding to the selection signal; and

a video play module configured to display a corresponding play interface according to the type and play the video.

According to a third aspect, the invention relates to an apparatus of providing episode selection of video is provided which includes:

a processor;

a memory for storing instructions executable by the processor;

wherein, the processor is configured to:

for an arbitrary video, acquire a characteristic identification of the video;

query at least two types of m videos with the same characteristic identification, where m≥2, wherein the at least two types includes any two or all of online video, offline video, and live video; and
provide a list of episode selection according to the m videos.

In one particular embodiment, the steps of the method of providing the episode selection of video are determined by computer program instructions.

Consequently, according to a fourth aspect, the invention is also directed to a computer program for executing the steps of a method of providing the episode selection of video as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure have the following advantages.

By acquiring a characteristic identification of an arbitrary video, querying at least two types of m videos with the same characteristic identification, and providing a list of episode selection according to the m videos, the at least two types including any two or all of online video, offline video, and live video, the problems in the related art can be solved that the play and selection of only a single type of multiple-episode video are provided, and the switch between different types of videos requires a large amounts of additional operations, and the smoothness when a user views the video is influenced, and it can be realized that in a list of episode selection, the function of selecting episodes in at least two types of videos including online video, offline video and live video may be provided so that the switch and selection between different types of videos is simpler and more convenient, thereby improving the smoothness when a user views the video.

It should be understood that, the general description above and the detailed description below are merely exemplary, and do not limit the disclosure..

### BRIEF DESCRIPTION OF THE DRAWINGS

The accompanying drawings, which are incorporated in and constitute a part of this specification, illustrate the embodiments according to the present disclosure, and serve as explaining the principles of the present disclosure together with the description.
Fig.1 is a flowchart of a method of providing episode selection of video according to an exemplary embodiment;
Fig.2A is a flowchart of another method of providing episode selection of video according to an exemplary embodiment;
Fig. 2B is a view showing an interface interaction view related to the present embodiment;
Fig.3 is a block diagram of an apparatus of providing episode selection of video according to an exemplary embodiment;
Fig.4 is a block diagram of another apparatus of providing episode selection of video according to an exemplary embodiment; and
Fig.5 is a block diagram of an apparatus according to an exemplary embodiment.

Through the above accompany drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

Herein, the exemplary embodiments will be described in detail, the examples of which are illustrated in the appended drawings. When the following description involves the appended drawings, the same reference number in the appended drawings illustrates the same or similar elements, unless otherwise. The implementation described in the following exemplary embodiments doesn't mean all the implementation consistent with the present disclosure. Rather, they are only examples of methods and apparatuses consistent with some aspects of the present disclosure detailed in the enclosed claims.

In respective embodiments of the present disclosure, a video player may be software with a function of playing a video as well as an electronic device with a function of playing a video. When the video player is software with a function of playing a video, the software runs in an electronic device.

In addition, the above electronic device may be generally a smart mobile phone, a tablet PC, a smart television, an ebook reader, a Moving Picture Experts Group Audio Layer III (MP3) player, a Moving Picture Experts Group Audio Layer IV (MP4) player, a laptop portable computer, a desktop computer, and a smart TV, or the like.

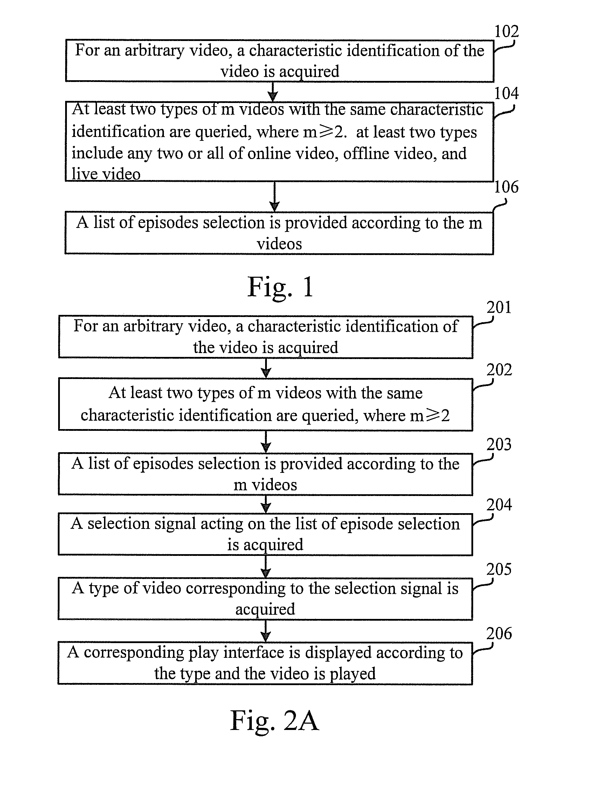

Fig.1 is a flowchart of a method of providing episode selection of video according to an exemplary embodiment. This embodiment takes the method of providing episode selection which is applied in a video player for example. The method of providing episode selection of video may include the following steps.

At step 102, for an arbitrary video, a characteristic identification of the video is acquired.

At step 104, at least two types of m videos with the same characteristic identification are queried, where m≥2. Herein, the at least two types include any two or all of online video, offline video, and live video.

At step 106, a list of episode selection is provided according to the m videos.

Accordingly, in the method of providing episode selection of video, by acquiring a characteristic identification of an arbitrary video, querying at least two types of m videos with the same characteristic identification, and providing a list of episode selection according to the m videos, the at least two types including any two or all of online video, offline video, and live video, the problems in the related art can be solved that the play and selection of only a single type of multiple-episode video are provided, and the switch between different types of videos requires a large amounts of additional operations, and the smoothness when a user views the video is influenced, and it can be realized that in a list of episode selection, the function of selecting episodes in at least two types of videos including online video, offline video and live video may be provided so that the switch and selection between different types of videos is simpler and more convenient, thereby improving the smoothness when a user views the video.

Fig.2A is a flowchart of another method of providing episode selection of video according to an exemplary embodiment. This embodiment takes the method of providing episode selection which is applied in a video player for example. The method of providing episode selection of video may include the following steps.

At step 201, for an arbitrary video, a characteristic identification of the video is acquired.

When a user selects and plays an arbitrary video, the video player acquires a characteristic identification of the video. Herein, the characteristic identification is used for identifying different programs. As for a multiple-episode video, different episodes correspond to the same characteristic identification. A multiple-episode video may a TV drama with episodes, a movie with parts, a program with periods, etc.

For example, a TV drama " 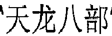 " ("dragon eight") has 38 episodes, which correspond to the same characteristic identification, for example, the same characteristic identification is "1". For example, a variety show " 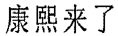 ("KangXi Come")" is divided into more than 1000 periods which correspond to the same characteristic identification, for example, the same characteristic identification is "2".

In addition, the type of the video selected by a user may be any of online video, offline video, and live video.

At step 202, at least two types of m videos with the same characteristic identification are queried, where m≥2.

After acquiring the characteristic identification of the arbitrary video, the video player queries at least two types of m videos with the same characteristic identification. Herein, the at least two types include any two or all of online video, offline video, and live video.

The m videos may include a video selected by a user and/or a video associated with the video selected by the user. As for a multiple-episode video, an associated video of any episode is the rest episodes in the multiple-episode video.

In addition, since offline resources of a video are usually stored locally, and online resources and live resources are usually stored in the server, a video player may query at least two types of m videos with the same characteristics identification locally and/or from the server.

For online videos, a server accesses online resources from various online video providers in advance, and then assigns characteristic identifications to online videos corresponding to respective online resources, wherein different programs correspond to the different characteristics identifications. For offline videos, since offline videos are usually obtained by downloading online videos from a server or from online video providers via a server and then storing the downloaded online videos locally, the characteristic identification corresponding to each offline videos is the characteristic identification assigned to the online video corresponding to the offline video by the server. For live videos, the server acquires live schedules from the broadcast content providers in advance, and thereafter performs a match with an online video by means of name matching, keyword matching, content matching, and so on. If the match is successful, the server assigns a characteristics identification of the online video to a live video that successfully matches the online video.

Therefore, when a video player need query online video and/or live video with the same characteristics identification from the server, the video player sends a characteristics identification of a video selected by a user to the server. After receiving the characteristics identification, the server queries online video and/or live video having the characteristics identification according to the pre-stored corresponding relationships between different online videos and different characteristics identifications and/or the pre-stored corresponding relationships between different live videos and different characteristics identifications, and feeds back the query result to the video player. The video player obtains at least two types of m videos, which includes any two or all of online video, offline video, and live video, by integrating the query results received from the server with the query results acquired locally.

At step 203, a list of episode selection is provided according to the m videos.

The video player provides the list of episode selection according to the m videos when querying the at least two types of m videos with the same characteristics identification.

In the m videos, there may be a repetition among the different types of videos, for example, a TV drama " 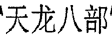 " may correspond to 37 online videos, 10 offline videos and 2 live videos. The 37 online videos respectively correspond to 1^{st} to 37^{th} episodes, the 10 offline videos respectively correspond to 11th to 20th episodes, and the two live videos respectively correspond to the thirteenth episode broadcasted on a TV channel A and the thirty-eighth episode to be broadcasted on a TV channel B. Therefore, the video player removes the repetition among the m videos and then provides a corresponding playlist.

In an embodiment, the step of providing the list of episode selection may include the following sub-steps.

At a first sub-step, episode identifications of respective videos are acquired.

The video player acquires the episode identifications corresponding to the m videos. Herein, the episode identifications identify different episodes corresponding to the same program. For a multiple-episode video, different episodes correspond to different episode identifications.

For example, the episode identifications corresponding to 38 episodes of the TV drama " 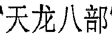 " are respectively "1" to "38".

At a second sub-step, n videos are obtained by removal of duplicate with regard to the m videos according to the episode identifications, where 1≤n≤m.

In a first possible implementation, when the m videos include an online videos and b offline videos, n videos are obtained by removing the online videos with the same episode identification as that of the offline videos, where a, b≥1.

An online video often contains relatively complete episodes. An offline video is usually a part of or all of an online video because the offline video is obtained by downloading the online video and stored it locally. On the basis of an online video, a video player remove the online video with the same episode identification as an offline video and keeps the offline video, whereby flow (or traffic) resources may be saved during video play while the unsmooth phenomena during video play may be effectively avoided.

In a second possible implementation, when m videos include c online videos and d live videos, n videos are obtained by removing the live videos with the same episode identification as that of the online videos, where c, d≥1.

Since the network or television live has timelines, the live video usually contains episodes which are not contained in an online video and an offline video. However, the live video has poor selectivity because the live video is provided by the broadcast content providers and the playing of the live video is controlled so that a user can't select a played episode according to his/her own time or preference. Therefore, a live video may be used as a good supplement to an online video and/or an offline video. On the basis of an online video, A video player remove the live video with the same episode identification as that of the online video and keeps the live video with the different episode identifications from the online video, whereby the selectivity may be guaranteed during video play while the user can view the latest and most complete episodes.

In a third possible implementation, when m videos include e offline videos and f live videos, n videos are obtained by removing the live videos with the same episode identification as that of the offline videos, where e, f≥1.

The third possible implementation can refer to the above the second possible implementation, which will be not repeated herein.

In a fourth possible implementation, when m videos include g online videos, h offline videos, and i live videos, n videos are obtained by removing the online videos with the same episode identification as that of the offline videos and removing the live videos with the same episode identification as that of the online videos or the offline videos, where g, h, and i≥1. The fourth possible implementation can refer to the above first and second possible implementations, which will be not repeated herein.

Still taking the TV drama " 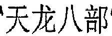 " for example, for the above 37 online videos, 10 offline videos and 2 live videos, a process of removing repetition performed by a video player may be as follows: firstly, 27 online videos (including first to tenth episodes, as well as twenty-first episode and thirty-seventh episode), 10 offline videos (including eleventh to twentieth episodes) and 2 live videos (including a thirteenth episode being broadcasted on a TV channel A and a thirty-eighth episode to be broadcasted on a TV channel B) are obtained by removing the online video with the same episode identification as that of the 10 offline videos. Thereafter, the live video with the same episode identification as that of the offline videos or the online videos is removed, that is, the thirteenth episode being broadcasted on the TV channel A is removed, and as a result, the 27 online videos (including first to tenth episodes, as well as twenty-first episode and thirty-seventh episode), 10 offline videos (including eleventh to twentieth episodes) and one live video (the thirty-eighth episode to be broadcasted on the TV channel B) are obtained.

At a third sub-step, a list of episode selection corresponding to the n videos is provided.

In a first possible implementation, when the n videos includes at least one online video, for each online video, at least one online play address corresponding to the online video is acquired, and the list of episode selection is provided according to the at least one online play address.

For the same online video, it may correspond to one or more online play addresses. For example, a first episode in the TV drama " 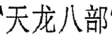 " corresponds to several online play addresses from a number of different video websites. The video player may perform the following two possible processing after acquiring at least one online play address of an online video:

1. An online play address is selected from at least one online play address according to a first predetermined condition which includes any of the highest definition, the highest resolution or the lowest bandwidth utilization of online resources corresponding to the online play address, and a list of episode selection containing the online resources corresponding to the online play address is provided.

Different online resources of the same online video may have differences in definition, resolution and network bandwidth utilization during play. The video player may select an online play address from at least one online play addresses based on the above differences, wherein the online resource corresponding to the selected online play address has the highest definition, or the highest resolution, or the lowest bandwidth utilization. Then the video player displays the online resource corresponding to the selected online play address in the list of episode selection for the user to select, thereby providing better user viewing experience.

2. A list of episode selection containing at least one online resource corresponding to at least one online play address is provided.

The video player may also display all of a plurality of online resources in the list of episode selection so that a user may select the preferable online resources to play from the list.

In a second possible implementation, when the n videos include at least one offline video, for each offline video, at least one offline play address corresponding to the offline video is acquired, and the list of episode selection is provided according to the at least one offline play address.

For the same offline video, it may correspond to one or more offline play address. For example, an eleventh episode in the TV drama " 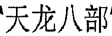 " may correspond to several offline play addresses of different video formats or different files. The video player may perform the following two possible processing after acquiring at least one offline play address of an offline video:

1. An offline play address is selected from at least one offline play address according to a second predetermined condition which includes any of the highest definition or the highest resolution of offline resources corresponding to the offline play address, and a list of episode selection containing the offline resources corresponding to the offline play address is provided.

2. A list of episode selection containing at least one offline resource corresponding to at least one offline play address is provided.

The two processing are the same as or similar to the two processing in the online video, which will not be repeated herein.

In a third possible implementation, when the n videos include at least one live video, for each live video, at least one broadcast channel corresponding to the live video is acquired, and the list of episode selection is provided according to the at least one broadcast channel.

For the same live video, it may correspond to one or more broadcast channels. For example, the thirty-eighth episode " 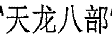 " may correspond to several different TV broadcast channels. The video player may perform the following processing after acquiring the at least one broadcast channel corresponding to an arbitrary live video.

1. Broadcast times of respective broadcast channels are acquired.

Different broadcast channels have different live schedules including a schedule of live video, a schedule of broadcast time of respective live videos, and so on. For the same live video, the video player acquires the broadcast times of the live video on different broadcast channels.

2. The broadcast channel being on live and/or to be on live earliest is selected according to the broadcast time.

In addition, when there are a plurality of broadcast channels being on live, the plurality of broadcast channels being on live may be retained at the same time, so that a user may select a broadcast channel to be viewed from the broadcast channels; Similarly, when there are a plurality of broadcast channels to be on live earliest, the plurality of broadcast channels to be on live earliest may be retained at the same time, so that a user may select a broadcast channel to be viewed from the broadcast channels.

3. The list of episode selection containing broadcast channels being on live and/or to be on live earliest is provided.

The video player displays the broadcast channels being on live and/or to be on live earliest in the list of episode selection so that a user may select a broadcast channel to be viewed from the broadcast channels.

Alternatively, when the list of episode selection contains a broadcast channel to be on live earliest, the video player records the broadcast time of the broadcast channel to be on live earliest, and provide a subscription and/or reminder service according to the broadcast time. If a user sets the subscription regarding a certain live video on a certain broadcast channel, the video player sends a reminder notice to a user within a predetermined time before the live video is played, so as to inform the user that the subscripted live video is to be played.

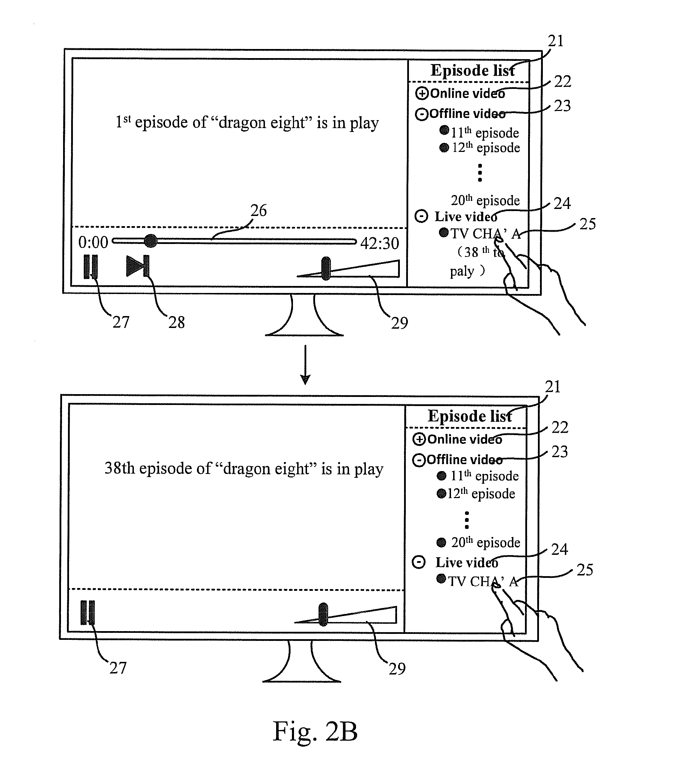

Referring to figure 2B, it shows a view of an interface interaction related to the present embodiment. A user is viewing a first episode of the TV drama " 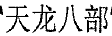 ", and the video player provides a list of episode selection 21. The list of episode selection 21 includes video resources or broadcast channels corresponding to various types of videos such as an online video 22, an offline video 23 and a live video 24, for a user to select.

It should be noted that the above steps 201 to 203 may be separately implemented by a video player, and may be also implemented through the interaction between the video player and the server. A suitable implementation manner may be selected according to the practical application, and the embodiments of the present disclosure do not limit to this.

The video player may further perform the following steps after providing the list of episode selection according to the m videos.

At step 204, a selection signal acting on the list of episode selection is acquired.

A user may select an arbitrary video to play in the selection list provided by the video player, and correspondingly, the video player acquires a selection signal and generated by triggerring of the user.

At step 205, a type of video corresponding to the selection signal is acquired.

The video player acquires the type of video corresponding to the selection signal, which includes any of online video, offline video, and live video.

At step 206, a corresponding play interface is displayed according to the type and the video is played.

The play interfaces corresponding to different types of videos may vary. For example, a play interface of an online video usually contains a progress control bar, a play/pause control, a next episode control and a volume control, etc... However, a play interface of a live video usually doesn't contain a progress control bar and a next episode control because a user is not allowed to control the play progress and play contents. Therefore, in order to further improve the user's experience of viewing the video, the video player may provide different play interfaces when playing different types of videos, or adaptively modify or adjust the play interface, thereby satisfying the user's basic operation while avoiding the unnecessary trouble to the user

Referring to Fig.2B, when the video player play a first episode of the TV drama " 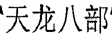 ", since the first episode of the TV drama " 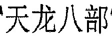 " is an online video, a displayed play interface may include a progress control bar 26, a play/pause control 27, a next episode control 28 and a volume control 29. When a user triggers to select a "TV channel A" 25 in the list of episode selection 21, the video player begins to play a thirty-eighth episode of the TV drama " 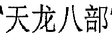 ". Since the thirty-eighth episode of the TV drama " 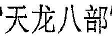 " is a live video, the displayed play interface may only include the play/pause control 27 and the volume control 29.

Accordingly, in the method of providing episode selection of video, by acquiring a characteristic identification of an arbitrary video, querying at least two types of m videos with the same characteristic identification, and providing a list of episode selection according to the m videos, the at least two types including any two or all of online video, offline video, and live video, the problems in the related art can be solved that the play and selection of only a single type of multiple-episode video are provided, and the switch between different types of videos requires a large amounts of additional operations, and the smoothness when a user views the video is influenced, and it can be realized that in a list of episode selection, the function of selecting episodes in at least two types of videos including online video, offline video and live video may be provided so that the switch and selection between different types of videos is simpler and more convenient, thereby improving the smoothness when a user views the video

In addition, the method of providing episode selection of video provided by the embodiments may further remove the repeated part among the acquired different types of videos according to episode identification of respective videos, thereby avoiding unnecessary trouble when a user selects episodes and improving efficiency of selecting episodes. At the same time, according to different characters of different types of videos, on basis of online videos, the video player may remove an online video with the same episode identification as offline videos and retains the offline videos, thereby saving flow resources during the playing while avoiding unsmooth phenomena during the playing of online video, and, the video player may remove live video with the same episode identification as online videos and retains the offline videos with the different episode identification from online videos. On the basis of an online video, A video player remove the live video with the same episode identification as that of the online video and retains the live video with the different episode identifications from the online video, whereby the selectivity may be guaranteed during video play while the user can view the latest and most complete episodes.

In addition, the method of providing episode selection of video provided by the embodiments may further provide different play interfaces regarding different types of videos, thereby satisfying the user's basic operation while avoiding the unnecessary trouble to the user and further improving the user's experience when viewing a video.

Hereafter, embodiments of an apparatus of the present disclosure will be described and the embodiments of an apparatus may be used for implementing the embodiments of the method of the present disclosure. The details which are not disclosed in the embodiments of the apparatus of the present disclosure, may refer to the embodiments of the method of the present disclosure.

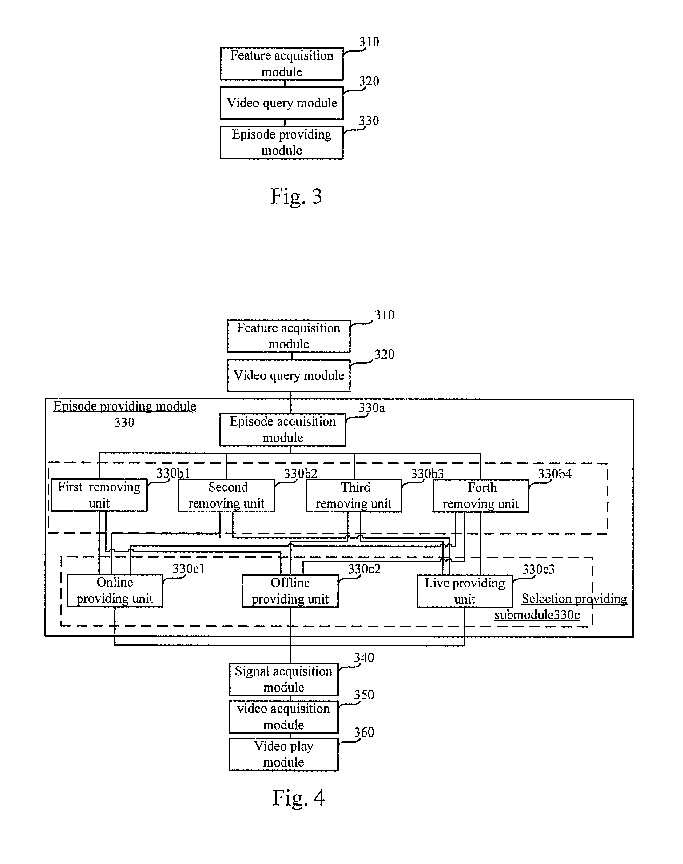

Fig.3 is a block diagram of an apparatus of providing episode selection of video according to an exemplary embodiment. The apparatus of providing episode selection of video may be implemented as a part of or all of a video player by software, hardware or the combination thereof. The apparatus of providing episode selection of video may include a feature acquisition module 310, a video query module 320, and an episode providing module 330.

A feature acquisition module 310 is configured to acquire a characteristic identification of an arbitrary video.

A video query module 320 is configured to query at least two types of m videos with the same characteristic identification, where m≥2; wherein, the at least two types includes any two or all of online video, offline video, and live video.

The episode providing module 330 is configured to provide a list of episode selection according to the m videos.

Accordingly, in the apparatus of providing episode selection of video, by acquiring a characteristic identification of an arbitrary video, querying at least two types of m videos with the same characteristic identification, and providing a list of episode selection according to the m videos, the at least two types including any two or all of online video, offline video, and live video, the problems in the related art can be solved that the play and selection of only a single type of multiple-episode video are provided, and the switch between different types of videos requires a large amounts of additional operations, and the smoothness when a user views the video is influenced, and it can be realized that in a list of episode selection, the function of selecting episodes in at least two types of videos including online video, offline video and live video may be provided so that the switch and selection between different types of videos is simpler and more convenient, thereby improving the smoothness when a user views the video.

Fig.4 is a block diagram of another apparatus of providing episode selection of video according to an exemplary embodiment. The apparatus of providing episode selection of video may be implemented as a part of or all of a video player by software, hardware or the combination thereof. The apparatus of providing episode selection of video may include a feature acquisition module 310, a video query module 320, and an episode providing module 330.

The feature acquisition module 310 is configured to acquire a characteristic identification of an arbitrary video.

The video query module 320 is configured to query at least two types of m videos with the same characteristic identification, where m≥2, wherein the at least two types includes any two or all of online video, offline video, and live video.

The episode providing module 330 is configured to provide a list of episode selection according to the m videos.

In an embodiment, the episode providing module 330 includes an episode acquisition module 330a, a video removing sub-module 330b, and an episode-selection providing sub-module 330c.

The episode acquisition module 330a is configured to acquire episode identifications of respective videos.

The video removing sub-module 330b is configured to obtain n videos by removal of duplicate with regard to the m videos according to the episode identifications, where 1≤n≤m.

In an embodiment, the video removing sub-module 330b includes a first removing unit 330b1, or a second removing unit 330b2, or a third removing unit 330b3, or a fourth removing unit 330b4.

The first removing unit 330b1 is configured to, when the m videos comprise a online videos and b offline videos, obtain the n videos by removing online video with the same episode identification as that of the offline videos, where a, b≥1.

The second removing unit 330b2 is configured to, when the m videos comprise c online videos and d live videos, obtain the n videos by removing live video with the same episode identification as that of the online videos, where c, d≥1.

The third removing unit 330b3 is configured to, when the m videos comprise e offline videos and f live videos, obtain the n videos by removing live video with the same episode identification as that of the offline videos, where e, f≥1.

The fourth removing unit 330b4 is configured to, when the m videos comprise g online videos, h offline videos and i live videos, obtain the n videos by removing online video with the same episode identification as that of the offline videos and removing live video with the same episode identification as that of the offline videos or the online videos, where g, h, i≥1.

The episode-selection providing sub-module 330 is configured to provide a list of episode selection corresponding to the n videos.

In an embodiment, the episode-selection providing sub-module 330c includes an online providing unit 330c1, an offline providing unit 330c2, and/or a live providing unit 330c3.

The online providing unit 330c1 is configured to, when the n videos comprise at least one online video, for each online video, acquire at least one online play address corresponding to the online video, and provide the list of episode selection according to the at least online play address.

In an embodiment, the online providing unit 330c1 includes a selectively providing sub-unit or a directly providing sub-unit.

The selectively providing sub-unit is configured to select an online play address from the at least one online play address according to a predetermined condition which includes any of the highest definition, the highest resolution, or the lowest bandwidth utilization of the online resources corresponding to the online play address, and provide the list of episode selection containing the online resource corresponding to the online play address.

The directly providing sub-unit is configured to provide a list of episode selection containing at least one online resource corresponding to the at least one online play address.

The offline providing unit330c2 is configured to, when the n videos comprise at least one offline video, for each offline video, acquire at least one offline play address corresponding to the offline video, and provide the list of episode selection according to the at least one offline play address.

In an embodiment, the offline providing unit 330c2 includes a selectively providing sub-unit, or a wholly providing sub-unit.

The selectively providing sub-unit is configured to select an offline play address from the at least one offline play address according to a predetermined condition which includes any of the highest definition, the highest resolution, or the lowest bandwidth utilization of the offline resources corresponding to the offline play address, and provide the list of episode selection containing the offline resource corresponding to the offline play address.

The wholly providing sub-unit is configured to provide the list of episode selection containing the offline resource corresponding to the offline play address.

The live providing unit 330c3 is configured for, when the n videos comprise at least one live video, for each live video, acquiring at least one broadcast channel corresponding to the live video, and providing the list of episode selection according to the at least one broadcast channel.

In an embodiment, the live providing unit 330c3 includes a time acquisition sub-unit, a live selection sub-unit, and a live providing sub-unit.

The time acquisition sub-unit is configured to acquire broadcast times of the respective broadcast channels.

The live selection sub-unit is configured to select a broadcast channel being on live and/or to be on live earliest according to the broadcast time.

The live providing sub-unit is configured to provide the list of episode selection containing the broadcast channel being on live and/or to be on live earliest.

In an embodiment, the live providing unit 330c3 further includes a time record sub-unit and a server providing sub-unit.

The time record sub-unit is configured to record broadcast time of a broadcast channel to be on live earliest when the list of episode selection contains the broadcast channel to be on live earliest.

The server providing sub-unit is configured to provide a subscription and/or reminder service according to the broadcast time.

In an embodiment, the apparatus further includes:

A signal acquisition module 340 is configured to acquire a selection signal acting on the list of episode selection.

A video acquisition module 350 is configured to acquire the type of video corresponding to the selection signal.

A video play module 360 is configured to display a corresponding play interface according to the type and play the video.

Accordingly, in the apparatus of providing episode selection of video, by acquiring a characteristic identification of an arbitrary video, querying at least two types of m videos with the same characteristic identification, and providing a list of episode selection according to the m videos, the at least two types including any two or all of online video, offline video, and live video, the problems in the related art can be solved that the play and selection of only a single type of multiple-episode video are provided, and the switch between different types of videos requires a large amounts of additional operations, and the smoothness when a user views the video is influenced, and it can be realized that in a list of episode selection, the function of selecting episodes in at least two types of videos including online video, offline video and live video may be provided so that the switch and selection between different types of videos is simpler and more convenient, thereby improving the smoothness when a user views the video.

In addition, the apparatus of providing episode selection of video provided by the embodiments may further remove the repeated part among the acquired different types of videos according to episode identification of respective videos, thereby avoiding unnecessary trouble when a user selects episodes and improving efficiency of selecting episodes. At the same time, according to different characters of different types of videos, on basis of online videos, the video player may remove an online video with the same episode identification as offline videos and retains the offline videos, thereby saving flow resources during the playing while avoiding unsmooth phenomena during the playing of online video, and, the video player may remove live video with the same episode identification as online videos and retains the offline videos with the different episode identification from online videos. On the basis of an online video, a video player may remove the live video with the same episode identification as that of the online video and retains the live video with the different episode identifications from the online video, whereby the selectivity may be guaranteed during video play while the user can view the latest and most complete episodes.

In addition, the apparatus of providing episode selection of video provided by the embodiments may further provide different play interfaces regarding different types of videos, thereby satisfying the user's basic operation while avoiding the unnecessary trouble to the user and further improving the user's experience when viewing a video.

In the apparatus in the above embodiments, the implementation operations of respective modules have been described in detail in the method of the embodiments, which will be not described in detail herein.

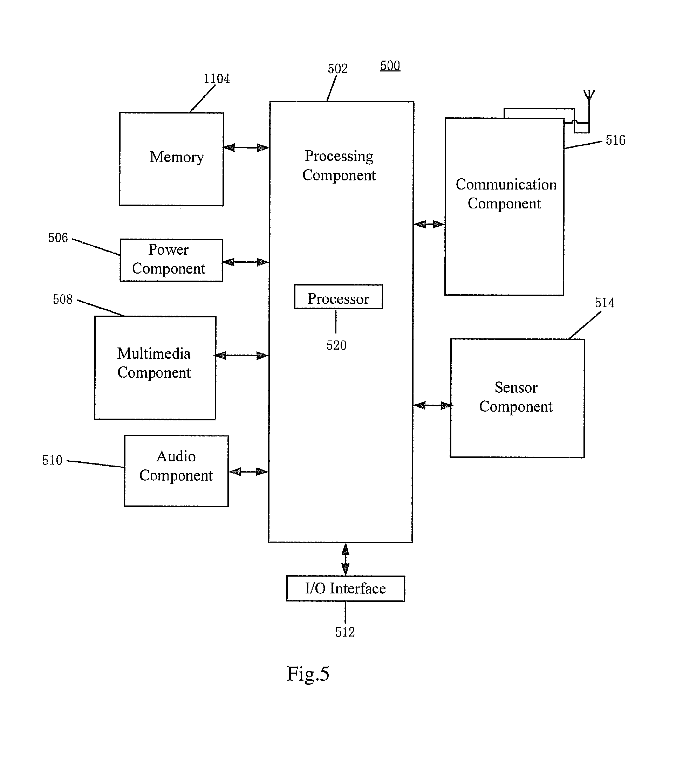

Fig.5 is a block diagram of an apparatus 500 of providing episode selection of video according to an exemplary embodiment. For example, the apparatus 500 may be a mobile phone, a computer, a digital broadcast terminal, a message sending and receiving device, a game console, a tablet device, a medical equipment, a fitness equipment, personal digital assistants, etc..

Referring to Fig.5, the apparatus 500 may include one or more components: a processor component 502, a memory 504, a power component 506, a multimedia component 508, an audio component 510, an input/output (I/O) interface 512, a sensor component 514, and a communication component 516.

The processor component 502 typically controls overall operations of the apparatus 500, such as the operations associated with display, telephone calls, data communications, camera operations, and recording operations. The processor component 502 may include one or more processors 520 to execute instructions to perform all or part of the steps in the above described methods. Moreover, the processor component 502 may include one or more modules which facilitate the interaction between the processor component 502 and other components. For instance, the processor component 502 may include a multimedia module to facilitate the interaction between the multimedia component 508 and the processor component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processor component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, when instructions stored in the storage medium are executed by a processor of the apparatus 500, the apparatus 500 may be caused to be capable of performing a method for providing episodes selection of video as shown in Fig.1 and Fig.2A.

The person skilled in the art easily anticipates other solutions after consideration of the above description and implementation of the disclosure.

## Claims

1. A method of providing episode selection of video, **characterized by** comprising:
for an arbitrary video, acquiring (102) a characteristic identification of the video;
querying (104) at least two types of m videos with the same characteristic identification, where m≥2, wherein the at least two types comprises any two or all of online video, offline video, and live video; and
providing (106) a list of episode selection according to the m videos.

2. The method of claim 1, wherein, the step of providing a list of episode selection according to the m videos comprise:
acquiring episode identifications of the respective videos;
obtaining n videos by removal of duplicate with regard to the m videos according to the episode identifications, where 1≤n≤m; and
providing a list of episode selection corresponding to the n videos.

3. The method of claim 2, wherein the step of obtaining n videos by removal of duplicate with regard to the m videos according to the episode identifications comprises:
when the m videos comprise a online videos and b offline videos, obtaining the n videos by removing the online videos with the same episode identification as that of the offline videos, where a, b≥1;
or,
when the m videos comprise c online videos and d live videos, obtaining the n videos by removing the live videos with the same episode identification as that of the online videos, where c, d≥1;
or,
when the m videos comprise e offline videos and f live videos, obtaining the n videos by removing the live videos with the same episode identification as that of the offline videos, where e, f≥1;
or,
when the m videos comprise g online videos, h offline videos and i live videos, obtaining the n videos by removing the online videos with the same episode identification as that of the offline videos and removing the live videos with the same episode identification as that of the offline videos or the online videos, where g, h, i≥1.

4. The method of claim 2 or 3, wherein, the step of providing a list of episode selection corresponding to the n videos comprise:
when the n videos comprise at least one online video, for each online video, acquiring at least one online play address corresponding to the online video, and providing the list of episode selection according to the at least one online play address;
and/or,
when the n videos comprise at least one offline video, for each offline video, acquiring at least one offline play address corresponding to the offline video, and providing the list of episode selection according to the at least one offline play address;
and/or,
when the n videos comprise at least one live video, for each live video, acquiring at least one broadcast channel corresponding to the live video, and providing the list of episode selection according to the at least one broadcast channel.

5. The method of claim 4, wherein the step of providing the list of episode selection according to the at least one online play address comprises:
selecting an online play address from the at least one online play address according to a predetermined condition which includes one of online resources corresponding to the online play address having any one of highest definition, highest resolution, or lowest bandwidth utilization; and providing the list of episode selection containing the online resource corresponding to the online play address;
or,
providing the list of episode selection containing at least one online resource corresponding to the at least one online play address.

6. The method of claim 4 or 5, wherein, the step of providing the list of episode selection according to the at least offline play address comprises:
selecting an offline play address from the at least one offline play address according to a predetermined condition which includes one of offline resources corresponding to the offline play address having any one of highest definition or highest resolution; and providing the list of episode selection containing the offline resource corresponding to the offline play address;
or,
providing the list of episode selection containing at least one offline resource corresponding to the at least one offline play address.

7. The method of any one of claims 4 to 6, wherein, the step of providing the list of episode selection according to the at least live channel comprising:
acquiring broadcast times of the respective broadcast channels;
selecting a broadcast channel being on live and/or to be on live earliest according to the broadcast times; and
providing the list of episode selection containing the broadcast channel being on live and/or to be on live earliest.

8. The method of claim 7, wherein, the method further comprises:
when the list of episode selection contains the broadcast channel to be on live earliest, recording a broadcast time of the broadcast channel to be on live earliest; and
providing a subscription and/or reminder service according to the broadcast time.

9. The method of any of claims 1-8, wherein, the method further comprises:
acquiring (204) a selection signal acting on the list of episode selection;
acquiring (205) a type of a video corresponding to the selection signal; and
displaying (206) a corresponding play interface according to the type and play the video.

10. An apparatus of providing episode selection of video, **characterized in that**, the apparatus comprises:
a feature acquisition module (310) configured to for an arbitrary video, acquire a characteristic identification of the video;
a video query module (320) configured to query at least two types of m videos with the same characteristic identification, where m≥2, wherein the at least two types includes any two or all of online video, offline video, and live video; and
an episode providing module (330) configured to provide a list of episode selection according to the m videos.

11. The apparatus of claim 10, wherein, the episode providing module comprises an episode acquisition module, a video removing sub-module, and an episode-selection providing sub-module;
the episode acquisition module is configured to acquire episode identifications of the respective videos;
the video removing sub-module is configured to obtain n videos by removal of duplicate with regard to the m videos according to the episode identifications, where 1≤n≤m; and
the episode-selection providing sub-module is configured to provide a list of episode selection corresponding to the n videos.

12. The apparatus of claim 11, wherein, the episode-selection providing sub-module (330) comprises an online providing unit (330c1), and/or an offline providing unit (330c2), and/or a live providing unit (330c3à;
the online providing unit is configured to, when the n videos comprise at least one online video, for each online video, acquire at least one online play address corresponding to the online video, and provide the list of episode selection according to the at least online play address;
the offline providing unit is configured to, when the n videos comprise at least one offline video, for each offline video, acquire at least one offline play address corresponding to the offline video, and provide the list of episode selection according to the at least one offline play address; and
the live providing unit is configured to, when the n videos comprise at least one live video, for each live video, acquire at least one broadcast channel corresponding to the live video, and provide the list of episode selection according to the at least one broadcast channel.

13. The apparatus of any one of claims 10 to 12, wherein, the apparatus further comprises:
a signal acquisition module configured to acquire a selection signal acting on the list of episode selection;
a video acquisition module configured to acquire a type of a video corresponding to the selection signal; and
a video play module configured to display a corresponding play interface according to the type and play the video.

14. A computer program including instructions for executing the steps of a method for providing episode selection of video according to any one of claims 1 to 9 when said program is executed by a computer.

15. A recording medium readable by a computer and having recorded thereon a computer program including instructions for executing the steps of a method for providing episode selection of video according to any one of claims 1 to 9.
